# DEMANDE DE BREVET EUROPEEN

(11) **EP 1 314 610 A2**
(43) Date de publication de la demande: **28.05.2003**
(21) Numéro de dépôt: 02292874.1
(22) Date de dépôt: 19.11.2002
(51) Int. Cl.: B60R 7/02

(54) **Dispositif de cloisonnement escamotable d'un compartiment a bagages de vehicule automobile**

(30) Priorité: 20.11.2001 FR 0114985
(71) Demandeur: Centre d'Etudes et Recherche pour l'Automobile ( CERA), 51100 Reims (FR)
(72) Inventeur: Bayle, Andre-Xavier, 51100 Reims (FR)
(74) Mandataire: Geismar, Thierry

(57) **Abrégé**

L'invention a pour objet un dispositif de cloisonnement d'un compartiment (1) à bagages de véhicule automobile du type comprenant un panneau transversal de cloisonnement (5) destiné à être disposé sensiblement transversalement dans le compartiment (1) en étant mobile au moins longitudinalement, et au moins un organe longitudinal de cloisonnement (6) associé audit panneau (5) par une première extrémité (6a), ledit organe (6) étant destiné à être associé, par une deuxième extrémité (6b), au compartiment (1) de sorte que lors du déplacement du panneau (5) à l'intérieur du compartiment (1) dans un sens ou dans l'autre, l'organe (6) soit déployé, respectivement ployé.

L'invention concerne également un habillage d'un compartiment sur lequel ce dispositif est destiné à être associé, ainsi qu'un ensemble comprenant l'habillage et, associé à lui, le dispositif de cloisonnement.

## Description

L'invention concerne un dispositif de cloisonnement d'un compartiment à bagages de véhicule automobile, un habillage d'un tel compartiment sur lequel ce dispositif est destiné à être associé, ainsi qu'un ensemble comprenant l'habillage et, associé à lui, le dispositif de cloisonnement.

Du fait des accélérations et des secousses auxquelles un véhicule automobile est soumis, les bagages contenus dans son compartiment à bagages subissent des mouvements qui sont indésirables en ce qu'ils peuvent occasionner du bruit ou un endommagement desdits bagages.

Pour résoudre ce problème, il est connu de disposer à l'intérieur du compartiment à bagages des moyens pour limiter ces mouvements.

En particulier, on a proposé des dispositifs de cloisonnement du compartiment qui permettent de créer plusieurs volumes dans le compartiment. Ainsi, en disposant les bagages dans les différents volumes, on peut limiter efficacement les mouvements précités.

L'invention propose un dispositif de cloisonnement perfectionné qui, en étant particulièrement simple de construction, peut être réalisé à un coût compatible avec ceux en vigueur dans l'industrie automobile, tout en étant particulièrement fiable, facilement utilisable et complètement modulable.

En outre, la disposition du dispositif selon l'invention dans le compartiment ne nécessite que peu de modifications de celui-ci et seulement au niveau de son habillage, ce qui est également un avantage important dans le domaine technique considéré.

Enfin, le dispositif de cloisonnement selon l'invention peut, lorsqu'il n'est pas utilisé, être escamoté, ce qui présente le double avantage de ne pas nuire à l'esthétique du compartiment et de ne pas réduire son volume utile.

A cet effet, et selon un premier aspect, l'invention propose un dispositif de cloisonnement d'un compartiment à bagages de véhicule automobile du type comprenant un panneau transversal de cloisonnement destiné à être disposé sensiblement transversalement dans le compartiment en étant mobile au moins longitudinalement, et au moins un organe longitudinal de cloisonnement associé audit panneau par une première extrémité, ledit organe étant destiné à être associé, par une deuxième extrémité, au compartiment de sorte que lors du déplacement du panneau à l'intérieur du compartiment dans un sens ou dans l'autre, l'organe soit déployé, respectivement ployé.

Selon un deuxième aspect, l'invention propose un habillage d'un compartiment à bagages de véhicule automobile du type comprenant deux garnitures latérales et une barre de seuil, dans lequel la barre de seuil comprend des moyens pour associer au moins un organe de cloisonnement d'un tel dispositif de cloisonnement.

Selon un troisième aspect, l'invention propose un ensemble comprenant un tel habillage et, associé à lui, le dispositif de cloisonnement, ledit ensemble étant destiné à être disposé dans un compartiment à bagages de véhicule automobile de sorte que le panneau soit disposé sensiblement transversalement dans le compartiment en étant mobile au moins longitudinalement entre une première position escamotée dans laquelle le panneau est disposé sensiblement contre la barre de seuil, les organes étant ployés, et une pluralité de positions d'utilisation dans lesquelles les organes sont progressivement déployés.

D'autres objets et avantages de l'invention apparaîtront au cours de la description qui suit, faite en référence aux dessins annexés dans lesquels :

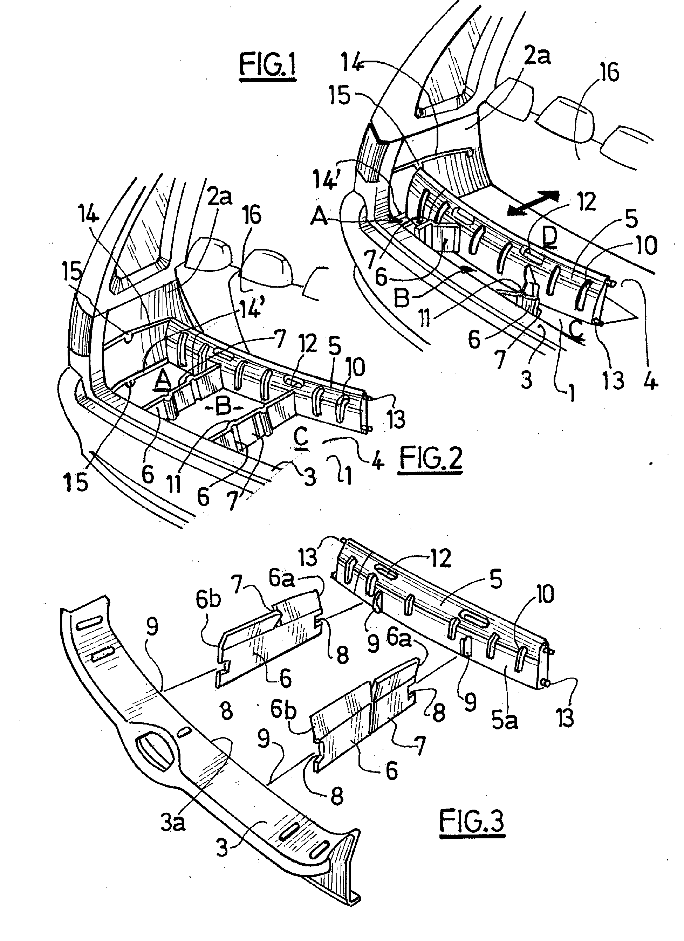

- la figure 1 est une vue partielle en perspective d'un compartiment à bagages de véhicule dans lequel, selon un premier mode de réalisation, un ensemble comprenant un habillage et, associé à lui, un dispositif de cloisonnement est monté, le dispositif de cloisonnement étant dans une position intermédiaire d'utilisation ;
- la figure 2 est une vue analogue à la figure 1 dans laquelle le dispositif de cloisonnement est dans une position extrême d'utilisation ;
- la figure 3 est une vue éclatée du dispositif de cloisonnement et de la barre de seuil de l'habillage qui sont représentés sur les figures 1 et 2 ;

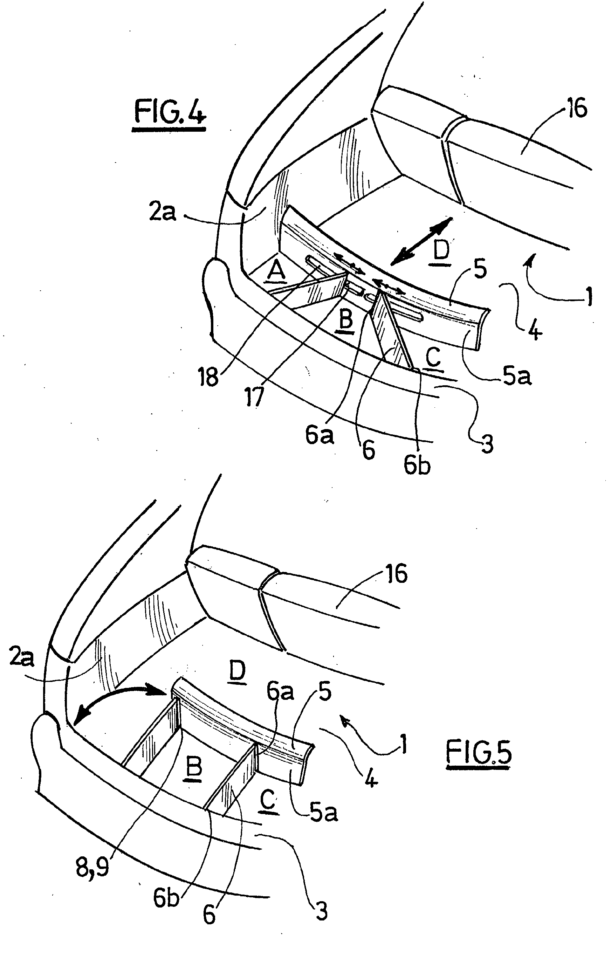

- la figure 4 est une vue partielle en perspective d'un compartiment à bagages de véhicule dans lequel, selon un deuxième mode de réalisation, un ensemble comprenant un habillage et, associé à lui, un dispositif de cloisonnement, le dispositif de cloisonnement étant dans une position intermédiaire d'utilisation ;
- la figure 5 est une vue partielle en perspective d'un compartiment à bagages de véhicule dans lequel, selon un troisième mode de réalisation, un ensemble comprenant un habillage et, associé à lui, un dispositif de cloisonnement, le dispositif de cloisonnement étant dans une position extrême d'utilisation.

En relation avec les figures 1 et 2, on décrit un ensemble comprenant un habillage et, associé à lui, un dispositif de cloisonnement, ledit ensemble étant monté à l'intérieur d'un compartiment à bagages 1 de véhicule automobile.

L'habillage comprend notamment deux garnitures latérales 2a (pour des raisons de clarté, une seule garniture est représentée sur les figures, la deuxième étant de structure analogue et disposée symétriquement) et une barre de seuil 3, qui sont respectivement fixées, par tous moyens adéquats, sur les faces internes des parois latérales et arrière du compartiment 1 de sorte à les recouvrir.

De façon conventionnelle, une moquette 4 est également disposée pour recouvrir le fond du compartiment 1 de sorte à présenter une esthétique satisfaisante.

Le dispositif de cloisonnement comprend un panneau transversal de cloisonnement 5 qui est disposé sensiblement transversalement dans le compartiment 1, c'est à dire dans la direction perpendiculaire au déplacement du véhicule.

Le dispositif de cloisonnement comprend en outre au moins un organe longitudinal de cloisonnement 6 associé audit panneau 5 par une première extrémité 6a, ledit organe 6 étant associé, par une deuxième extrémité 6b, à la barre de seuil 3.

En variante, l'habillage peut ne pas comprendre de barre de seuil 3, la deuxième extrémité 6b est alors directement associée à la face interne de la paroi arrière du compartiment 1, le panneau 5 faisant alors office de barre de seuil.

Le panneau 5 est mobile longitudinalement, c'est à dire dans la direction de déplacement du véhicule, et lors d'un déplacement longitudinal du panneau 5 à l'intérieur du compartiment 1 dans un sens ou dans l'autre, ledit panneau 5 entraîne l'organe 6 de sorte à le déployer, respectivement à le ployer.

Dans le mode de réalisation représenté sur les figures 1 et 2, le dispositif de cloisonnement comprend deux organes 6 de sorte, en position déployée, à définir dans le compartiment 1 trois volumes A, B, C de taille sensiblement identique.

A cet effet, les organes 6 sont associés sur la paroi arrière 5a du panneau 5 en étant sensiblement équirépartis.

Toutefois, un nombre différent d'organes 6, éventuellement associés à des positions différentes sur le panneau 5, peut être prévu en fonction du nombre et de la taille respective des volumes souhaités.

En relation avec la figure 3, on décrit un dispositif de cloisonnement dans lequel chaque organe est formé d'un longeron rigide 6 pourvu d'une charnière 7 agencée pour permettre le pliage du longeron 6.

En variante non représentée, les organes 6 peuvent être formés d'une bande souple, par exemple textile, qui est ployée, respectivement déployée par enroulement dans un dispositif prévu sur la barre de seuil 3 ou sur le panneau 5.

Dans le mode de réalisation représenté sur les figures 1 à 3, les charnières 7, prévues sensiblement au milieu des longerons 6, sont formées par amincissement de l'épaisseur du longeron 6 de sorte à permettre le pliage du longeron rigide 6 par action manuelle.

En outre, chaque longeron 6 est pourvu à chaque extrémité 6a, 6b de moyens permettant son montage mobile en rotation respectivement sur le panneau 5 et sur la barre de seuil 3.

A cet effet, la barre de seuil 3 et le panneau 5 comprennent, sur leur paroi respectivement avant 3a et arrière 5a, des moyens complémentaires pour permettre l'association du longeron 6. Suivant une réalisation, les moyens de montage sont formés d'une demi-charnière 8, les moyens complémentaires étant formés d'une demi-charnière 9 de forme complémentaire.

Le panneau 5 ainsi que les longerons 6 et les éléments 2a, 3 de l'habillage peuvent être en matériau plastique, par exemple en polypropylène éventuellement revêtu d'une moquette, et peuvent être obtenus par une technique de moulage par injection ou par thermoformage. Ces techniques sont particulièrement appropriées en ce qu'elles sont bien adaptées aux cadences et coûts en vigueur dans l'industrie automobile et en ce qu'elles permettent de réaliser les pièces de façon monobloc en intégrant en particulier, de façon connue, les charnières 7 et demi-charnières 8, 9. En outre, dans le mode de réalisation représenté sur les figures 1 et 2, le panneau 5 et les longerons 6 comprennent des bossages 10, 11 de rigidification qui sont facilement réalisables par ces techniques.

Dans le mode de réalisation représenté sur la figure 3, les deux longerons 6 sont de structure analogue, à savoir comprenant une charnière 7 permettant le pliage du longeron 6 en deux parties sensiblement de même taille. En outre, les charnières 7 étant formées d'une zone d'épaisseur amoindrie qui est décalée transversalement par rapport au plan longitudinal du longeron 6, lesdites charnières 7 ne permettent le pliage des longerons 6 que dans un sens.

Comme illustré plus particulièrement sur la figure 1, le sens de pliage d'une charnière 7 d'un longeron 6 est inversé par rapport à celui de la charnière 7 de l'autre longeron 6 qui est disposée en regard.

Cette réalisation permet, dans la position intermédiaire illustrée sur la figure 3, de définir un volume central B de taille plus importante que les deux volumes latéraux A, C, tout en gardant une bonne stabilité transversale du panneau 5 lors de son déplacement.

Toutefois, en fonction des besoins spécifiques, on peut également prévoir que le sens de pliage des charnières 7 de chaque longeron 6 soit identique, ou que les organes 6 soient distincts.

Selon une réalisation non représentée, au moins un longeron 6 peut être pourvu d'un moyen d'actionnement du pliage, ledit moyen pouvant être disposé sur au moins une charnière 7. En variante, le moyen d'actionnement peut être prévu sur au moins l'une des demi-charnières 8, 9.

Par exemple, le moyen d'actionnement peut être formé d'un ressort qui, lors du pliage, est mis en tension par le mouvement du longeron 6 et/ou du panneau 5, ledit ressort pouvant ainsi exercer un effort de dépliage sur ledit longeron 6.

Cette réalisation, en assistant le déplacement du panneau 5, permet de faciliter la manipulation du dispositif de cloisonnement.

En outre, et toujours pour faciliter sa manipulation, le panneau 5 peut être pourvu d'au moins une poignée de préhension 12.

En outre, le dispositif de cloisonnement peut comprendre un moyen de verrouillage respectivement déverrouillage du déplacement du panneau 5, par exemple formé d'un organe déplaçable manuellement entre une position dans laquelle il interagit avec le déplacement du panneau 5 et une position dans laquelle il laisse libre ledit déplacement. En particulier, le moyen peut être prévu pour verrouiller le panneau 5 dans sa position escamotée.

Dans le mode de réalisation représenté, les extrémités latérales du panneau 5 sont pourvues chacune de deux ergots 13 destinés respectivement à venir s'engager dans un rail de guidage 14, 14' du déplacement du panneau 5, lesdits rails, au nombre de deux, étant prévus sur chaque garniture latérale 2a respectivement en partie supérieure et inférieure.

En variante, au moins un rail de guidage 14, 14' comprend des crans 15 destinés à recevoir un ergot 13 de sorte à bloquer le panneau 5 en des positions prédéterminées.

L'utilisateur peut alors déplacer le panneau 5 d'une position à une autre en dégageant l'ergot 13 du cran 15 par un déplacement vers le haut du panneau 5, puis en déplaçant le panneau 5 en translation longitudinale dans le sens voulu, pour enfin réengager l'ergot 13, par déplacement du panneau 5 vers le bas, dans le cran 15 correspondant à la position souhaitée.

En variante, non représentée, le déplacement longitudinal du panneau 5 s'effectue par translation des extrémités latérales dudit panneau le long de chaque garniture latérale 2a, le frottement desdites extrémités contre lesdites garnitures permettant à l'utilisateur de contrôler ce déplacement. Dans cette variante, chaque garniture latérale 2a comprend une butée assurant le blocage du panneau 5 en fin de course.

Comme il ressort de la description faite ci-dessus, le dispositif de cloisonnement est facilement utilisable par simple déplacement manuel du panneau 5, éventuellement guidé et/ou assisté, entre une première position escamotée dans laquelle le panneau 5 est disposé sensiblement contre la barre de seuil 3 ou contre la face interne de la paroi arrière du compartiment 1, les organes 6 étant ployés, et une pluralité de positions d'utilisation dans lesquelles les organes 6 sont progressivement déployés.

En particulier, la position intermédiaire représentée sur la figure 1 permet de définir trois « petits » volumes A, B, C délimités par la barre de seuil 3, le panneau 5, les garnitures latérales 2a et les organes 6, ainsi qu'un volume plus grand D délimité par le panneau 5, les garnitures latérales 2a et les sièges arrières 16 du véhicule. Les petits volumes A, B, C étant plus particulièrement destinés à recevoir des objets peu encombrants et/ou fragiles alors que le grand volume D est agencé pour recevoir des objets plus grands et/ou plus robustes.

De même, la position extrême représentée sur la figure 2 dans laquelle les organes 6 sont complètement déployés, permet de séparer le compartiment en trois volumes A, B, C sensiblement identiques et de taille intermédiaire.

En variante, on peut prévoir que, dans cette position extrême, un volume D soit également disponible entre le panneau 5, les garnitures latérales 2a et les sièges arrières 16, c'est-à-dire que la longueur des organes 6 déployés soit inférieure à la dimension longitudinale du compartiment 1.

L'invention permet également, en prévoyant que le panneau 5 ait une forme sensiblement complémentaire à celle de la barre de seuil 3, de loger, en position escamotée, le panneau 5 à l'intérieur de la barre de seuil 3 de sorte à cacher le dispositif de cloisonnement lorsqu'il n'est pas utilisé.

Sur les figures 4 et 5 sont représentés respectivement un deuxième et un troisième mode de réalisation d'un dispositif de cloisonnement comprenant deux longerons 6 rigides qui sont associés, par leur deuxième extrémité 6b, à la barre de seuil 3 ou directement à la face interne de la paroi arrière du compartiment 1.

Dans le deuxième mode de réalisation la première extrémité 6a de chaque longeron 6 est pourvue d'un ergot 17 qui est apte à se déplacer transversalement dans une rainure 18 prévue sur la paroi arrière 5a du panneau 5, l'ergot 17 et la rainure 18 étant agencés pour assurer l'association du longeron 6 sur le panneau 5.

Ainsi, par déplacement longitudinal du panneau 5, les ergots 17 se déplacent dans les rainures 18 respectives de sorte à ployer, respectivement déployer, les longerons 6 en les rabattant, respectivement redressant, transversalement contre la barre de seuil 2 ou contre la face interne de la paroi arrière du compartiment 1.

Dans ce mode de réalisation, l'association de chaque longeron 6 sur la barre de seuil 2 ou sur la face interne de la paroi arrière du compartiment 1 peut être réalisée au moyen d'une demi-charnière 8, 9 telle que décrit ci-dessus ou par un système ergot / rainure analogue à celui prévu respectivement sur la première extrémité 6a et sur la paroi 5a.

Dans le troisième mode de réalisation (figure 5), la première extrémité 6a de chaque longeron 6 est pourvue de moyens 8 permettant son montage mobile en rotation sur le panneau 5, et le panneau 8 est agencé pour être mobile de façon combinée longitudinalement et transversalement.

En particulier, la longueur du panneau 5 est prévue pour être de l'ordre de la dimension transversale du compartiment 1 diminuée de la longueur du longeron 6 de sorte, par un mouvement de type « essuie-glace » à ployer, respectivement déployer les longerons 6, en les rabattant, respectivement redressant, transversalement contre la barre de seuil 2 ou contre la face interne de la paroi arrière du compartiment 1.

## Revendications

1. Dispositif de cloisonnement d'un compartiment (1) à bagages de véhicule automobile du type comprenant un panneau transversal de cloisonnement (5) destiné à être disposé sensiblement transversalement dans le compartiment (1) en étant mobile au moins longitudinalement, et au moins un organe longitudinal de cloisonnement (6) associé audit panneau (5) par une première extrémité (6a), ledit organe (6) étant destiné à être associé, par une deuxième extrémité (6b), au compartiment (1) de sorte que lors du déplacement du panneau (5) à l'intérieur du compartiment (1) dans un sens ou dans l'autre, l'organe (6) soit déployé, respectivement ployé.

2. Dispositif selon la revendication 1, **caractérisé en ce que** chaque organe est formé d'un longeron rigide (6), la deuxième extrémité (6b) du longeron (6) étant pourvue de moyens (8) permettant son montage mobile en rotation sur le compartiment (1) ou sur la barre de seuil (3) de l'habillage du compartiment (1).

3. Dispositif selon la revendication 2, **caractérisé en ce que** les longerons (6) sont pourvus d'au moins une charnière (7) agencée pour permettre le pliage du longeron (6), la première extrémité (6a) du longeron (6) étant pourvue de moyens (8) permettant son montage mobile en rotation sur le panneau (5).

4. Dispositif selon la revendication 2, **caractérisé en ce que** la première extrémité (6a) de chaque longeron (6) est pourvue d'un ergot (17) qui est apte à se déplacer transversalement dans une rainure (18) prévue sur le panneau (5), l'ergot (17) et la rainure (18) étant agencés pour assurer l'association du longeron (6) sur le panneau (5).

5. Dispositif selon la revendication 2, **caractérisé en ce que** la première extrémité (6a) du longeron (6) est pourvue de moyens (8) permettant son montage mobile en rotation sur le panneau (5), le panneau (5) étant agencé pour être mobile de façon combinée longitudinalement et transversalement.

6. Dispositif selon l'une quelconque des revendications 2 à 5, **caractérisé en ce qu'**au moins un longeron (6) est pourvu d'un moyen d'actionnement du déploiement.

7. Dispositif selon la revendication 6, **caractérisé en ce que** le moyen d'actionnement est formé d'un ressort qui, lors du ploiement, est mis en tension par le mouvement du longeron (6) et/ou du panneau (5), ledit ressort pouvant ainsi exercer un effort de déploiement sur le longeron (6).

8. Dispositif selon l'une quelconque des revendications 1 à 7, **caractérisé en ce que** le panneau (5) est pourvu d'au moins une poignée de préhension (12).

9. Dispositif selon l'une quelconque des revendications 1 à 8, **caractérisé en ce qu'**il comprend un moyen de verrouillage respectivement déverrouillage du déplacement du panneau (5).

10. Dispositif selon l'une quelconque des revendications 1 à 4 et 6 à 9, **caractérisé en ce que** le panneau (5) est agencé pour être mobile longitudinalement.

11. Dispositif selon la revendication 10, **caractérisé en ce que** les extrémités latérales du panneau sont pourvues d'ergots (13) destinés respectivement à venir s'engager dans un rail de guidage (14, 14') du déplacement du panneau (5), lesdits rails étant prévus sur les garnitures latérales (2a) de l'habillage du compartiment (1).

12. Habillage d'un compartiment (1) à bagages de véhicule automobile du type comprenant deux garnitures latérales (2a) et une barre de seuil (3), **caractérisé en ce que** la barre de seuil (3) comprend des moyens pour associer au moins un organe de cloisonnement (6) d'un dispositif de cloisonnement selon l'une quelconque des revendications 1 à 11.

13. Habillage selon la revendication 12 lorsqu'elle dépend de la revendication 10 ou 11, **caractérisé en ce que** chaque garniture latérale (2a) comprend une butée de blocage.

14. Habillage selon la revendication 13 lorsqu'elle dépend de la revendication 12, **caractérisé en ce que** des rails de guidage (14, 14') du déplacement du panneau (5) sont prévus sur les garnitures latérales (2a), chaque rail (14) étant destiné à recevoir un ergot (13) de sorte à le guider en translation.

15. Habillage selon la revendication 14, **caractérisé en ce qu'**au moins un rail de guidage (14, 14') comprend des crans (15) destinés à recevoir un ergot (13) de sorte à bloquer le panneau (5) en des positions prédéterminées.

16. Ensemble comprenant un habillage selon l'une quelconque des revendications 12 à 15 et, associé à lui, un dispositif de cloisonnement selon l'une quelconque des revendications 1 à 11, ledit ensemble étant destiné à être disposé dans un compartiment (1) à bagages de véhicule automobile de sorte que le panneau (5) soit disposé sensiblement transversalement dans le compartiment (1) en étant mobile au moins longitudinalement entre une première position escamotée dans laquelle le panneau (5) est disposé sensiblement contre la barre de seuil (3), les organes (6) étant ployés, et une pluralité de positions d'utilisation dans lesquelles les organes (6) sont progressivement déployés.

17. Ensemble selon la revendication 16, **caractérisé en ce que** le panneau (5) a une forme sensiblement complémentaire à celle de la barre de seuil (3), de sorte, en position escamotée, à être sensiblement logé dans ladite barre de seuil (3).
